# EUROPEAN PATENT SPECIFICATION

(11) **EP 0 406 943 B1**
(45) Date of publication and mention of the grant of the patent: **15.05.1996**
(21) Application number: 90201699.7
(22) Date of filing: 27.06.1990
(51) Int. Cl.: G11B 23/087, G11B 15/675

(54) **System for recording/reproducing signals on/from magnetic tape, and apparatus and cassette for use in the system**
System zur Aufzeichnung/Wiedergabe von Signalen auf/vom Magnetband und Gerät und Kassette zur Verwendung in diesem System
Système d'enregistrement/reproduction de signaux sur/de bande magnétique, et appareil et cassette à utiliser dans ce système

(30) Priority: 03.07.1989 NL 8901682; 14.02.1990 NL 9000348
(43) Date of publication of application: 09.01.1991
(73) Proprietor: Philips Electronics N.V., 5621 BA Eindhoven (NL)
(72) Inventor: Vollmann, Norbert Christian, NL-5656 AA Eindhoven (NL)
(74) Representative: Cuppens, Hubertus Martinus Maria

(56) References cited:
- EP-A- 0 067 490
- EP-A- 0 214 820
- DE-A- 3 433 705
- DE-A- 3 433 866
- FR-A- 2 076 903
- GB-A- 712 536
- US-A- 3 706 979
- US-A- 3 904 150
- US-A- 4 620 254
- US-A- 4 782 407
- PATENT ABSTRACTS OF JAPAN vol. 9, no. 116 (P-357)(1839) 21 May 1985, & JP-A- 60 1685 (SONY K.K.) 07 January 1985,
- PATENT ABSTRACTS OF JAPAN vol. 9, no. 26 (P-332)(1749) 05 February 1985, & JP-A- 59 171090 (SONY K.K.) 27 September 1984,
- PATENT ABSTRACTS OF JAPAN vol. 8, no. 271 (P-320)(1708) 12 December 1984, & JP-A-59 139 184

## Description

The invention relates to a system for recording/reproducing signals on magnetic tape and comprising at least one cassette and at least one apparatus cooperating therewith, which apparatus comprises magnetic head means cooperating with the magnetic tape and which cassette is provided with the magnetic tape on two coplanar reels in a housing having two plane parallel main walls interconnected by transverse walls, at least one of the main walls being provided with two drive apertures for the passage of apparatus reel drive spindles and one transverse wall constituting a cassette front wall having a cassette front wall central opening and cassette front wall side openings on both sides of the cassette front wall central opening, which cassette comprises a shutter which is situated on the outside of the cassette and which is slidable over a certain slide travel distance between a closed position and an open position to cover a cassette front wall opening in the closed position and to expose said opening in the open position, which shutter is slidable along the cassette front wall in a lateral direction and has a shutter front wall situated near the cassette front wall and extending parallel thereto, the shutter front wall being formed with a shutter front wall opening such that in the closed position said shutter front wall opening is situated adjacent a cassette front wall opening and faces an imperforate portion of the cassette front wall and the central cassette front wall opening is covered at least in part by an imperforate portion of the shutter front wall, the cassette comprising resilient means which urge the shutter to the closed position. The invention also relates to an apparatus and a cassette for use in the system.

In recent new systems employing magnetic-tape cassettes for recording video signals or digital audio signals the high information density on the magnetic tape leads to high susceptibility to the effects of dirt and dust. To protect the magnetic tape the cassettes are therefore provided with a shutter which can close the openings in the cassette when the cassette has been removed from the apparatus.

A system of the type defined above is disclosed in DE-A-3 433 866 A1. This known system comprises a magnetic tape cassette which is substantially the same size as a Compact Cassette (IEC publication 94) and comprises two shutters which together are capable of closing three openings in the front wall of the cassette. The two shutter are slidable in a direction parallel to the cassette front wall and are urged towards each other with biasing means. The shutters are pressed to each other in the closed position and can be opened with two urging means in an apparatus designed for this cassette.

In a new system the apparatus can be designed to allow for the cassette and the space required for the shutter. However, if a new system, comprising apparatuses which cooperate with new cassettes having a shutter, is to be introduced to replace an existing system comprising cassettes not having a shutter, for example the Compact Cassette system (IEC publication 94), it will be advantageous if the existing apparatuses have to be modified only to a minimal extent. An additional advantage will then be that the manufacturers of the existing apparatuses can manufacture the new apparatuses without drastically modifying the production process.

However, if the shutter is of a construction similar to that of the above-mentioned prior-art cassette disclosed in DE-A-34 33 866 A1 this means that in the apparatus space should be provided for two shutter opening mechanisms.

In FR-A-2 076 903 a cassette with a single shutter is disclosed. This shutter is also slidable in a direction parallel to the cassette front wall. However, the shutter of this cassette is only capable of closing and opening one cassette front wall opening and this cassette does not comprise urging means to close the shutter automatically when the cassette is taken out of the apparatus.

It is an object of the invention to provide a system comprising cassettes having shutter with a minimum number of parts and that the urging means for opening the shutter requires only a small modification of the existing apparatuses.

It is another object of the invention to provide a system comprising cassettes having a shutter, the cassette including the shutter in its open position not occupying more space than required by the cassette with the shutter in its closed position or without the shutter.

To this end a system in accordance with the invention is characterized by the characterising features of the appended claim 1. Since the cassette has only one shutter, all front wall openings can be exposed with only one urging means which is positioned at one side of the shutter. As a result of this the existing apparatuses in conformity with the Compact Cassette system can be used for the new system without any drastic modifications.

A further embodiment of the system is characterized in that at least one of the two cassette front wall openings other than the central cassette front wall opening is a pressure roller opening for admitting a pressure roller to contact the tape in the cassette, that at least one pressure roller opening extends into at least one of the main walls of the cassette and that the corresponding opening in the shutter extends into the corresponding main portion of the shutter and in the opened position exposes the pressure roller opening both at the location of the cassette front wall and at the location of at least one main wall of the cassette.

As a result of this shape of the front opening of the shutter the part of the pressure roller opening in the main walls of the cassette can also be exposed. This enables the height of the pressure roller of a tape transport device to be larger than the thickness of the cassette, yet enabling the pressure roller to cooperate with the magnetic tape. The Applicant has already proposed systems for recording/reproducing signals, for example audio signals, which systems comprise both cassettes of an existing type and cassettes of a deviating new type, for which reference is made to EP-A-0 400 744 and EP-A- 0405661. The new system comprises an apparatus on which cassettes of both types can be played. At the location of the front wall one type of cassette provides enough room for a pressure roller of such a length that it cannot be accommodated in cassettes of the other type. By the use of the last mentioned embodiment of the invention problems can be avoided.

Yet another embodiment of the cassette in accordance with the invention is characterized in that a main portion of the shutter comprises cover portions which cover the two drive apertures in the closed position and the main portion of the shutter is formed with a single corresponding aperture which in the open position of the shutter faces a drive aperture, in which open position the other drive aperture is situated beside the shutter, so that both drive apertures are exposed. The shutter in the known cassette is only capable of covering openings in the front wall of the cassettes. Since in the cassette of the system in accordance with the invention the main portions of the shutter comprise cover portions it is also possible to cover openings in the main walls of the cassette. In the closed position of the shutter this precludes the ingress of dust or dirt into the cassette via the drive apertures and the reel hubs are protected against damage.

For a system comprising reversible cassettes drive apertures have to be provided in both main walls and both main portions of the shutter should comprise cover portions to enable the openings to be covered in the closed position.

A system in accordance with the invention comprising non reversible cassettes is characterized in that one main wall of the cassette is substantially imperforate and the main portion of the shutter overlying the substantially imperforate main wall extends at the most over half the distance between the cassette front wall and the centres of the reels. Since one main wall of the cassette is substantially imperforate the corresponding main portion of the shutter can be smaller. This has the advantage that a larger surface area of the cassette can be used for applying a label.

A further embodiment of a cassette in accordance with the invention is characterized in that a main wall of the cassette has locating apertures for the passage of locating pins of an apparatus, which pins are engageable in the locating apertures and each have a supporting surface adapted to cooperate with the main surface directly around the locating aperture, a main portion of the shutter has passages whose area is larger than that of the supporting surfaces of the locating pins, in the open position the passages overlie the locating apertures and expose parts of the main wall of the cassette around said apertures to allow an unobstructed cooperation between the main wall and the locating pins and in the closed position of the shutter the passages overlie imperforate parts of a main wall. Locating apertures in cassettes are generally known for example from Compact Cassettes as defined in IEC publication 94. A very important feature of the construction of the shutter in accordance with the invention is that the type being present of the cover portions of the shutter which overlie the main walls the supporting surfaces of the locating pins can cooperate unimpedably with the portions of the main walls of the cassette which are situated around the locating apertures in the opened position of the shutter. This is very important in order to prevent the presence of the shutter from influencing the height position of the cassette in an apparatus. If the supporting surfaces cooperate with the shutter, height variations may arrive as a result of variations in the thickness of the shutter and the clearance between the shutter and the main wall of the cassette. Another very important feature is that if the shutter is to be opened by means of a construction provided in the apparatus, the cassette in accordance with the invention cannot be loaded into an apparatus which is not constructed for cooperation with the cassette. In such a non compatible apparatus the shutter covers the locating apertures so that the locating pins in the apparatus cannot engage the locating apertures. Thus, the cassette is held back and cannot be loaded into the apparatus. For systems comprising reversible cassettes it is again necessary to form locating apertures in both main walls and both main portions of the shutter should be formed with passages.

A suitable embodiment of the system in accordance with the invention is characterized in that passages for locating pins are provided only in the main portions of the shutter which are situated at the location of the main wall in which the drive apertures are formed.

A further embodiment of a system in accordance with the invention is characterized in that the shutter is movable along the cassette front wall from its closed position into two opposite directions and has two open positions situated symmetrically at opposite sides of the closed position. Since a reversible cassette is to be loaded into an apparatus in two ways and the apparatus generally comprises means for moving the shutter in one specific direction the shutter must be movable into two opposite directions.

A further embodiment of the system in accordance with the invention is characterized in that the main walls and the cassette front wall are locally recessed over a distance at least substantially equal to the thickness of the shutter, in such a way that the non-recessed portions of said walls and the outer surface of the shutter are substantially flush with each other. This substantially prevents the shutter from being inadvertently urged into to the opened position by projecting portions of the shutter, for example if the shutter is situated on the main walls of the cassette housing instead of in the recesses.

A further embodiment of the system in accordance with the invention is characterized in that the resilient means are spring means which are situated between a main wall of the cassette and a main portion of the shutter and the spring means remain covered by the shutter in any position of the shutter. This prevents damage of the spring means and improves the appearance of the cassette.

Another embodiment of the system in accordance with the invention is characterized in that the spring means comprise a spring having two legs, the spring is located in a recessed portion in a cassette main wall, the shutter main portion comprises an engaging portion extending perpendicular to the main portion and one of the legs of the spring engages the engaging portion on the shutter and the other leg engages the cassette main wall. Such a spring is easy to mount and due to its characteristics the force on the shutter varies only a little between the open and the closed position.

It is undesirable that a user of the system has to set the shutter to the open position before the cassette is inserted into the apparatus. In order to avoid this, an embodiment of the system in accordance with the invention is characterized in that the apparatuses comprise urging means for exerting lateral pressure on a lateral edge of a main portion of the shutter of the cassette to open the shutter, and at a lateral edge of the shutter the cassettes have a recess in a main wall for receiving that portion of the urging means which is in contact with the lateral edge of the shutter. In order to prevent the shutter from being pulled out of square when the cassette is opened an embodiment of the system is characterized in that the apparatus comprises urging means for the simultaneous cooperation with the lateral edges of the main portions of the shutter at both main walls of the cassette. For a correct positioning of the urging means relative to the shutter a further embodiment of the system is characterized in that the urging means comprise an at least substantially fork-shaped free end portion which engages around the cassette front wall and which comprises urging projections for cooperation with the shutter.

Yet another embodiment of the system is characterized in that the urging means are pivotable about a pivotal axis and are also translatable in a direction towards the pivotal axis. During insertion of the cassette into the apparatus the cassette acts against the urging means which are thereby pivoted and in their turn act against the shutter. In order to eliminate lost motion between the shutter and the housing of the cassette in the open position of the shutter and in order to keep the shutter correctly in its open position the urging means are translatable in a direction towards the pivotal axis against the action of a spring.

For a better engagement with the portion of the urging means which makes contact with the lateral edge of the shutter a further embodiment of the system is characterized in that at its side which is remote from the shutter the recess has a bevelled portion which is inclined relative to the cassette front wall. new cassette, so that the existing cassettes are not rendered useless.

Some embodiments of the invention will now be described in more detail, by way of example, with reference to the drawings in which:
Fig. 1 shows an apparatus in accordance with the invention with a cassette in accordance with the invention,
Fig. 2 shows an apparatus in accordance with the invention with an existing cassette in conformity with the Compact Cassette system,
Fig. 3 is a perspective view of a first embodiment of a cassette in accordance with the invention with a detached shutter,
Fig. 4 is a plan view of the cassette shown in Fig. 3 with the shutter in the closed position,
Fig. 5 is a plan view of the cassette shown in Fig. 3 with the shutter shown in an open position,
Fig. 6 is a perspective view of a second embodiment of a cassette in accordance with the invention with a detached shutter,
Fig. 7 is a plan view of a cassette shown in Fig. 6 with the shutter shown in the closed position,
Fig. 8 is a plan view of the cassette shown in Fig. 6 with the shutter shown in an open position,
Fig. 9 is a perspective view of a third embodiment of a cassette in accordance with the invention with a detached shutter,
Fig. 10 is a perspective view of the cassette shown in Fig. 9 in the assembled condition,
Fig. 11 is an underneath view of the cassette shown in Fig. 10 with a shutter shown in the closed position,
Fig. 12 is an underneath view of the cassette of Fig. 10 with a shutter shown in the open osition,
Fig. 13 is front view of the cassette shown in Fig. 10 with the shutter shown in the closed position,
Fig. 14 is a front view of the cassette shown in Fig. 10 with a shutter shown in the open position,
Fig. 15 is a plan view of the cassette shown in Fig. 10 with the shutter shown in the closed position and showing the urging means of an apparatus in accordance with the invention,
Fig. 16 is a plan view of the cassette shown in Fig. 10 with the shutter shown in the open position and showing the urging means of an apparatus,
Fig. 17 is a front view of the cassette shown in Fig. 15 with urging means, and
Fig. 18 is a front view similar to that in Fig. 17 but showing a cassette in accordance with the Compact Cassette system and urging means of an apparatus in accordance with the invention.

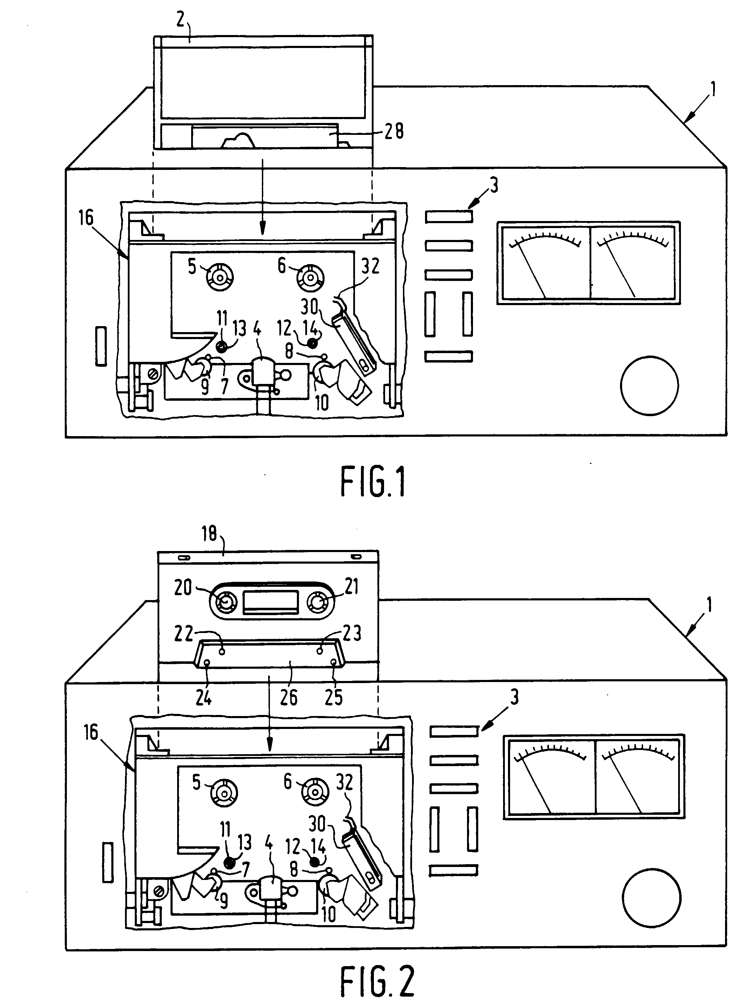

Fig. 1 shows an apparatus 1 and a cassette 2 of a new system in accordance with the invention for recording and reproducing audio signal on/from magnetic tape. The apparatus comprises control means 3 for controlling various functions of the apparatus and magnetic-head means comprising a magnetic head 4 for reading and writing information on/from the magnetic tape in the cassette. The magnetic tape is wound on reels. The apparatus further comprises tape transport means comprising capstans 7, 8 and pressure rollers 9, 10 for the transport of the magnetic tape past the magnetic-head means 4. During tape transport the magnetic tape is unwound from one of the reels and is taken up on the other reel by means of reel drive spindles 5, 6. For a correct cooperation of the cassette 2 with the apparatus 1 of the apparatus comprises locating pins 11, 12 having supporting surfaces 13, 14 for positioning the cassette. The apparatus comprises a loading mechanism 16 in the form of a cassette holder which is pivotable to receive the cassette. The parts described above and their operation are generally known from apparatuses adapted to cooperate with cassettes in conformity with the well-known Compact Cassette system.

The apparatus 1 is also constructed to cooperate with the well known Compact Cassettes. Fig. 2 shows such a cassette 18. The Compact Cassette 18 has drive apertures 20, 21, locating apertures 22, 23 and openings 24, 25 for the passage of the capstans 7 and 8. For the passage of inter alia the pressure rollers 9, 10 and the magnetic head means 4 the cassette 18 has a thicker portion 26 which bounds openings in the front wall of the cassette.

The cassette 2 (Fig. 1) in accordance with the new system comprises a shutter 28 which in a closed position covers openings in the cassette. To open the shutter 28 the loading mechanism 16 of the apparatus 1 comprises urging means 30 which can exert lateral pressure on the shutter 28. These urging means 30 comprise sensing means 32, which during cooperation wiyh the Compact Cassette 18 are in contact with the thicker portion 26, so that the urging means 30 are pushed away and remain inoperative.

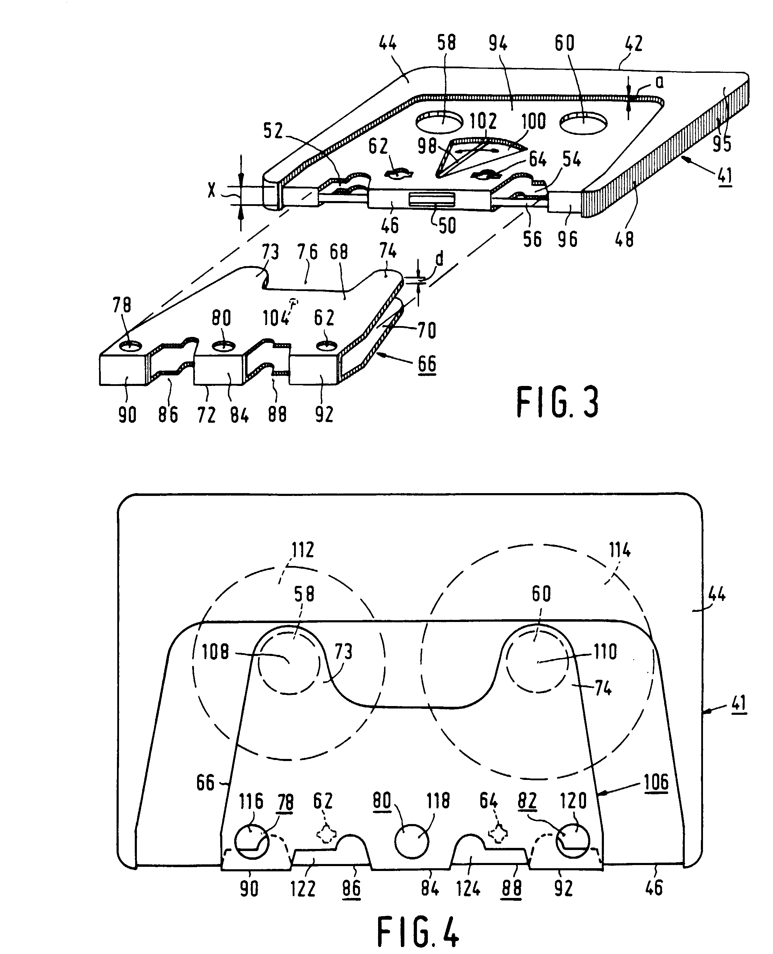

Fig. 3 shows a first embodiment of the cassette in accordance with the new system. The cassette 41 comprises a housing 42 having two plane-parallel main walls 44 interconnected by transverse walls 46, 48, of which one transverse wall constitutes a cassette front wall 46. The cassette front wall 46 is formed with a central opening 50 for the passage of the magnetic head 4, and two pressure-roller openings 52, 54, situated at opposite side of the central opening, for the passage of the pressure rollers 9, 10. The pressure roller openings 52, 54 extend into the main walls 44 have has such a shape that the capstans 7, 8 can enter the cassette through the pressure roller openings. This shape of the pressure roller openings 52, 54 has the advantage that pressure rollers 9, 10 having a height larger than the local distance x between the main walls of the cassette 41 can also cooperate with a magnetic tape 56 in the cassette. The main walls 44 further have drive apertures 58, 60 for the passage of reel drive spindles 5, 6 and coaxial locating apertures 62, 64 for the passage of locating pins 11, 12.

In order to protect the magnetic tape 56 in the cassette 41 against damage and to preclude the ingress of dust and dirt into the cassette the cassette comprises a shutter 66 to close the above-mentioned openings. The shutter 66 comprises two main portions 68, 70 overlying the main walls 4 of the cassette and a shutter front wall 72 overlying the cassette front wall 46, at least when the shutter 66 is placed on the cassette 41. The main portions 68, 70 of the shutter 66 comprise cover portions 73, 74 for covering the drive apertures 58, 60, and between the cover portions a recess 76 is formed. The main portions 68, 70 are formed with passages 78, 80, 82 for the passage of the locating pins 11 and 12, at least in an open position of the shutter 66. The shutter front wall 72 has a central front wall 84 and two lateral front walls 90, 92 which are spaced from said central front wall by two identical front openings 86, 88 and which serve for covering the openings 50, 52 and 54 in the front wall 46 of the cassette 41. The other main wall of the cassette, which is not visible in Fig. 3, is formed with further drive apertures and further locating apertures. The main portion 30 of the shutter has further passages and further recess and the main portion 30 has further cover portions.

The cassette shown herein exhibits the principal characteristic features of the Compact Cassette in conformity with the international standard IEC 94-7. When the slide is open, the cassette can cooperate with an apparatus be longing to the Compact Cassette system, at least if a suitable height positioning of the front of the cassette is provided to ensure that the magnetic tape is situated at the appropriate height.

In order to obtain a flat and consequently convenient-to-handle cassette each main wall 44 is formed with a recess 94 in which the main portions 68, 70 of the shutter 66 engage. In order to obtain a flat cassette front wall 46 the cassette front wall 46 is a further recess 96 in which the shutter front wall 72 is engageable. The main walls 44 and the cassette front wall 46 are recessed over a distance equal to the thickness d of the shutter 66. As a result of this, the outer surface of the shutter 66 will be flush with the non-recessed portions 95 of the main walls 44 and of the cassette front wall 46. In order to keep the shutter 66 in its closed position, the cassette 41 comprises uring means 58. These urging means comprise a resilient pin 98 arranged in a further recess or opening 100 in the main wall 44. The pin 98 has a projecting portion 102 situated in a pothole 104 in the main wall 44 of the shutter.

Fig. 4 shows the shutter 66 in its closed position 106. The closed position 106 corresponds to a central position of the shutter 66 relative to the cassette 41. The cover portions 73, 74 cover the drive apertures 58, 60, which drive apertures are coaxial with the centres 108, 110 of reels 112, 114 on which the magnetic tape is wound. The passages 78, 80, 82 and the front openings 86, 88 face imperforate portions 116, 118, 120, 122 and 124 of the main wall 44 and of the cassette front wall 46. The central front wall 84 and the lateral front walls 90, 92 cover the central opening 50 and the pressure roller openings 52, 54.

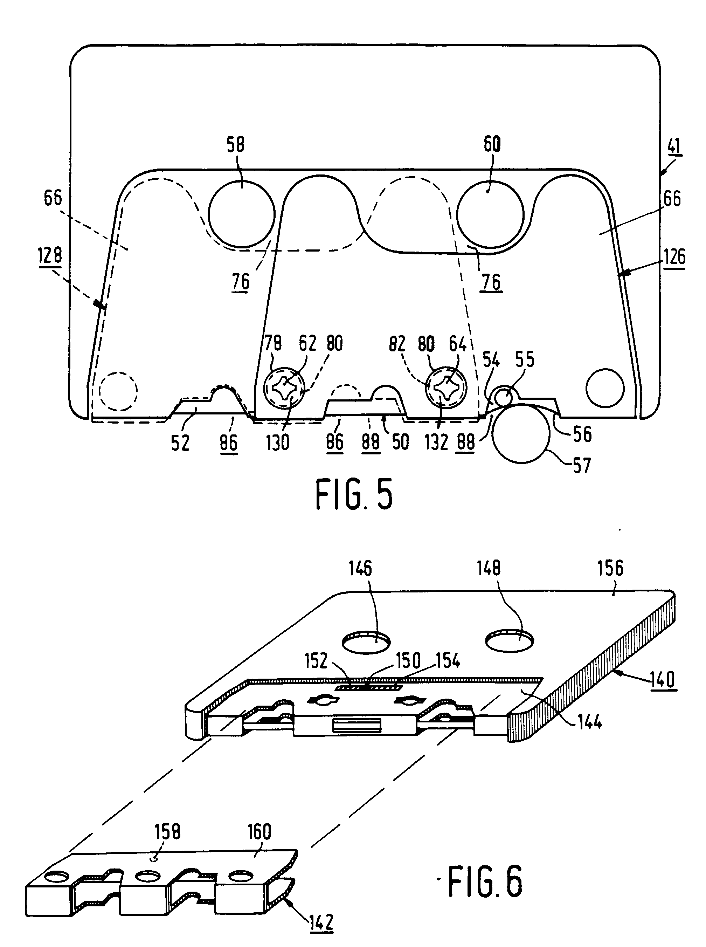

Fig. 5 shows the shutter 66 in a first open position 126 (solid lines) and in a second open position 128 (broken lines). In this first and second open position 126 and 128 respectively one drive aperture 60 or 58 is situated within the recess 76 and the other drive aperture 58 or 60 is situated beside the shutter 66. In the first open position 126 and the second open position 128 the passages 78, 80 and 80, 82 respectively are situated above the locating apertures 62 and 64 and the front openings 86 and 88 face the magnetic-head opening 50 and the pressure roller opening 54, or the pressure roller opening 52 and the magnetic head opening 50, and the other pressure roller opening 52 or 54 is situated beside the shutter 66. The two open positions 126 and 128 are situated symmetrically at opposite sides of the closed position 106 and are reached by sliding the shutter 66 from the closed position 106 to the open position 126 or 128.

If the shutter 66 is in one of the open positions 126 or 128 and is not held in the open position the urging means, in the present case comprising the resilient pin 102, will urge the shutter 66 back to the closed position 106.

Portions 130, 132 of the main walls 4 directly around the locating apertures 62, 64 cooperate with supporting surfaces 13, 14 of the locating pins 11, 12 during cooperation with the apparatus 1. For an unimpeded cooperation between the supporting surfaces and the portions 130, 132 around the locating apertures 62, 64 the passages 78, 80 and 82 also allow the passage of the supporting surfaces. For this purpose the passages 78, 80 and 82 are larger in area than the supporting surfaces of the locating pins.

Fig.6 shows another embodiment of a magnetic-tape cassette in accordance with the invention. The difference between the cassette 140 and the cassette 41 described above resides in the shape of the shutter 142 and, consequently, the shape of the recess 144 and of the urging means. In the cassette 140 the drive apertures 146 and 148 are not covered by the shutter 142. Consequently, the shutter 142 is smaller than the shutter 66 of the cassette 41. This construction requires a modification of the urging means. The urging means comprise a pin 150 connected to helical-spring means by two portions 152 and 154 arranged in a slot in a main wall 156 of the cassette 140. The pin 150 is situated in a pothole 158 formed in a main portion 160 of the shutter 142. The helical spring means may comprise two separate springs or may be constituted by a single spring.

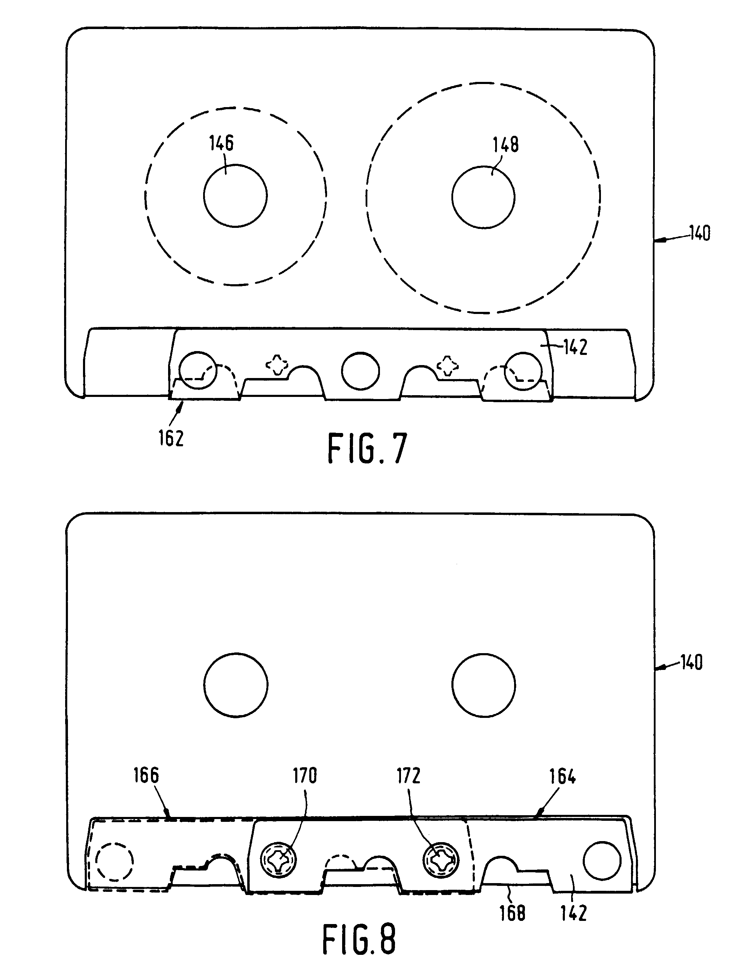

Fig. 7 shows the shutter 142 in a closed centre position 162 corresponding to the closed position. The drive apertures 146, 148 are not covered by the shutter 142. Fig. 8 shows the two open positions 164 and 166 of the shutter 142. The locating apertures 170 and 172 and the magnetic tape 168 are freely accessible in the open position.

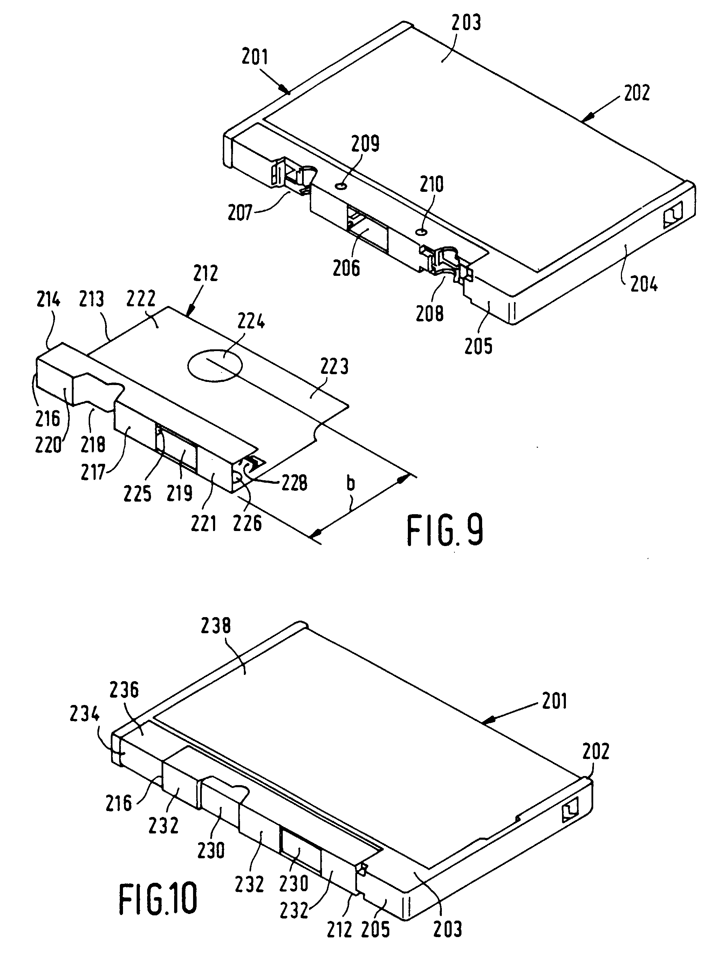

Fig. 9 shows a third embodiment of a cassette in accordance with the invention. The cassette 201 comprises a housing having two main walls 203 interconnected by transverse walls 204, of which one transverse wall constitutes a cassette front wall 205. The cassette front wall 205 has a central opening 206 and at each side thereof a pressure-roller opening 207 and 208 respectively which extends into the relevant main wall. The main walls 203 are formed with passages 209 and 210 for the passage of locating pins of an apparatus. If the cassette is situated in an apparatus the capstans of the apparatus, in addition to the pressure rollers, engage in the pressure roller openings. The cassette further has a shutter 212 having main portions 213 and 214, which overlie the main walls 203 of the housing 202, and a shutter front wall 216 which extends along the cassette front wall 205. The shutter front wall 216 has a central front wall 217 and lateral front walls 220 and 221 at opposite sides of said central front wall and spaced therefrom by front openings 218 and 219. A main portion 213 of the shutter 212 has cover portions 222 and 223 for closing drive apertures in a main wall of the cassette in the closed position. The main portion 213 further has a recess 224 to expose one of the drive apertures in the open position. To expose the locating apertures 209 and 210 passages 225 and 226 are formed in the main portion 213. The main portion 213 further comprises bent portions 228 which serve as guide elements for guiding the shutter during its displacement.

Fig. 10 shows the cassette 201 described above in its assembled condition, the shutter 212 being shown in its closed position. In the closed position the front openings in the shutter face the imperforate portion 230 of the cassette front wall 205 and the imperforate portion 232 of the shutter front wall 216 faces the openings in the cassette front wall 205. The portions 234 and 236 of the cassette front wall 205 and of the main wall 203 respectively are recessed. The shutter 212 is situated in these recesses so that the outer side of the shutter 212 is flush with the non-recessed portions of the housing 202. The main wall 203 further has a recess 238 for label. It is desirable to make the dimensions of the label as long as possible. Therefore, the main portion 214 of the shutter 212 is made as small as possible. The main portion 214 does not extend beyond half the distance b between the cassette front wall 205 and the centres of the reels, which distance is equal to the distance b between the shutter front wall 216 and the centre of the recess 224 in the main wall 213 of the shutter.

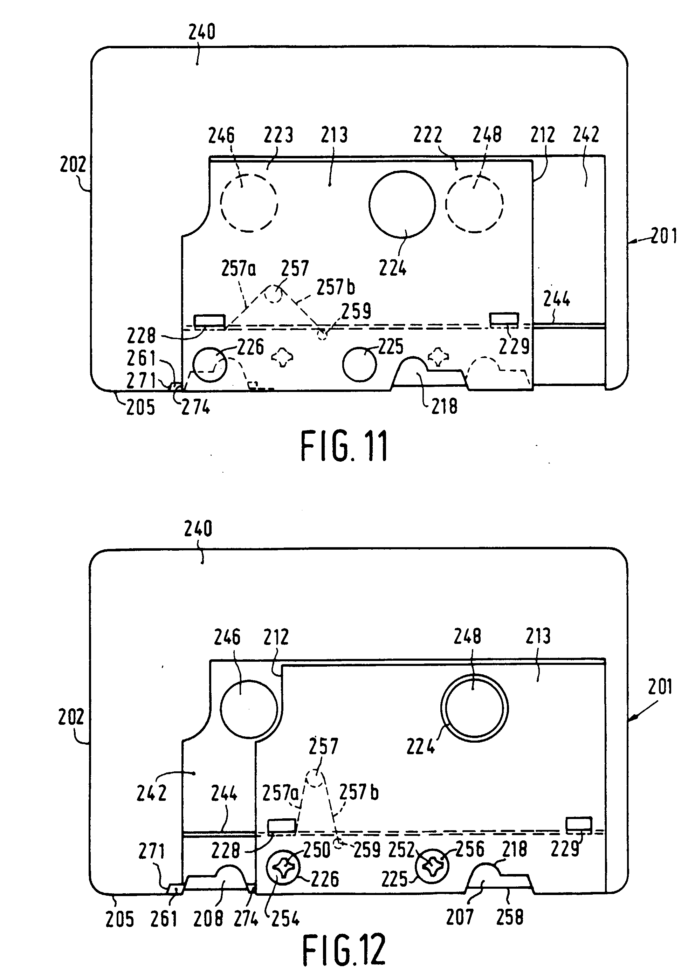

Figs. 11 and 12 show the other main wall 240 of the cassette 201. Fig. 11 shows the shutter 212 in the closed position and Fig. 12 shows the shutter 212 in the open position. Again the main portion 213 of the shutter is situated in a recessed portion 242 of the main wall 240 of the housing 202. The guide portions 228 and 229 engage in a guide groove 244 in the main wall 240 of the cassette. In the closed position (Fig. 11) the drive apertures 246 and 248 are covered by the cover portions 222 and 223 and the recess 224 as well as the passages 225 and 226 and the front openings 218 and 219 face imperforate portions of the housing 202 of the cassette. In the open position (Fig. 12) the recess 224 faces the drive aperture 248 and the other drive aperture 246 is situated beside the shutter 212. The passages 225 and 226 expose locating aperturtures 250 and 252 and also portions 254 and 256 of the main wall around the locating apertures, which portions 254 and 256 serve as supporting surfaces adapted to cooperate with supporting surfaces 13 and 14 of the locating pins 11 and 12 of the apparatus 1 (see Fig. 1). The front opening 218 in the shutter exposes the pressure roller opening 207 in the housing and the other pressure roller opening 208 is situated beside the shutter in the open position of this shutter, so that the magnetic tape 258 can cooperate with inter alia tape-transport means of an apparatus. In order to ensure that the shutter 212 has a stable closed position the cassette 201 comprises urging means 257 which urge the shutter 212 back from the open position (Fig. 12) into the closed position (Fig. 11). These urging means comprise resilient means in the form of a spring 257 having two spring legs 257a and 257b. One spring leg 257a acts against the guide portion 228 of the shutter and the other spring leg 257b extends through a hole 259 in the main wall 240 and is thereby immobilised relative to the housing 202.

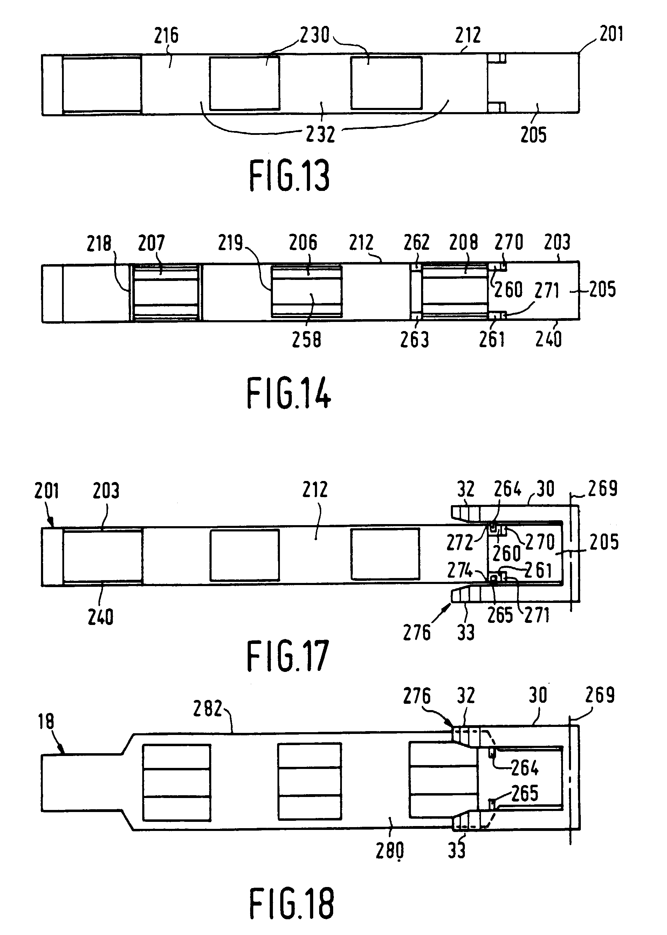

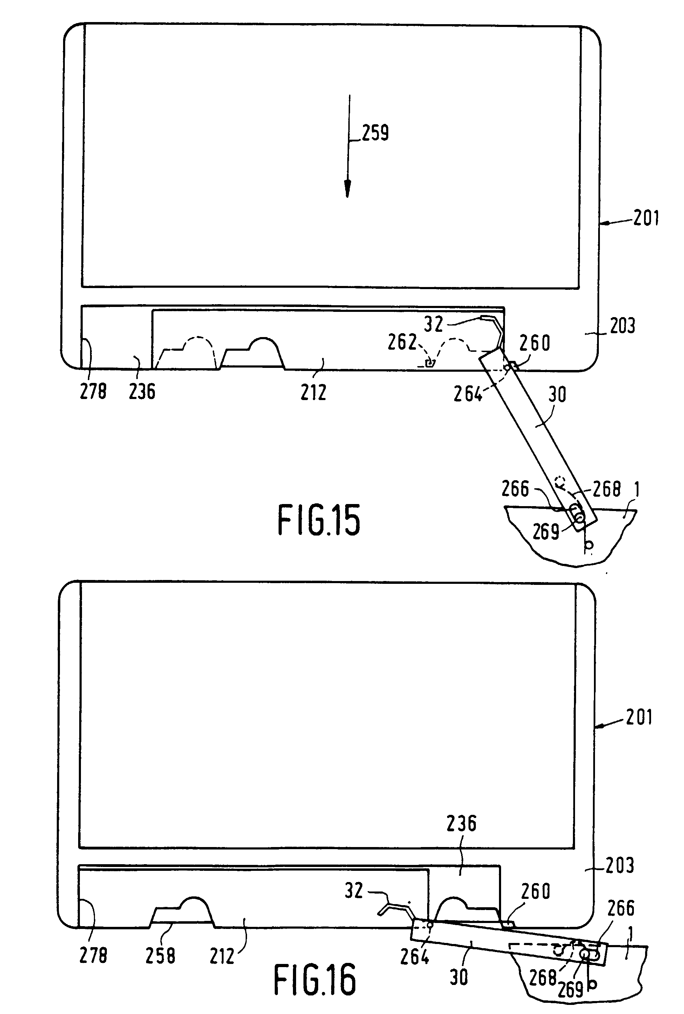

Figs. 13 and 14 show the front of the cassette 201 with the shutter 212 in the closed position and in the open position respectively. In the closed position (Fig. 13) the imperforate portion 232 of the shutter front wall 216 faces the central opening 206 and the pressure roller openings 207 and 208 and the front openings 218 and 219 face the imperforate portion 230 of the cassette front wall 205. In the opened position (Fig. 14) the front openings 218 and 219 coincide with the central opening 206 and the pressure roller opening 207, while the other pressure roller opening 208 is situated beside the shutter 212 to give access to the magnetic tape 258.

The principle of opening the shutter 212 is illustrated in Figs. 15 and 16. Fig. 15 illustrates the situation in which the cassette 201 has been inserted partly into the apparatus 1 in the direction indicated by the arrow 259. In the situation illustrated in Fig. 15 the cassette 201 has just come in contact with the urging means 30 and the shutter 212 is still in the closed position. Fig. 16 illustrates the situation in which the shutter 212 has been slid into its open position by the urging means 30.

Fig. 17 is a front view of the cassette 201 and the urging means 30 in the situation in which the shutter 212 is still in its closed position. The urging means 30 have a fork-shaped free end portion 276, which partly engages over the main walls of the cassette and which is situated at both sides of the cassette 201. In order to exert a lateral pressure on a lateral edge 272, 274 (see also Figs. 11 and 12) of a main portion 213, 214 of the shutter 212 the urging means 30 comprise a portion 264, 265 which is in contact with the lateral edge 272, 274 of the shutter 212. This lateral pressure on the shutter 212 causes the shutter to be moved from the closed position (Fig. 15) to the opened position (Fig. 16). The urging means 30 comprise urging projections 264 and 265 which constitute the portion of the urging means 30 which is in contact with the lateral edge 272, 274 of the shutter 212. To receive the urging projections 264 and 265 the main walls 203 and 240 of the cassette are formed with recesses 260 and 261, which at the side which is remote from the shutter 212 each have a bevelled edge 270, 271 which is inclined relative to the cassette front wall 205.

During insertion of the cassette 201 the urging means 30 pivot about a pivotal axis 269 (see Figs. 15 and 16). In order to ensure that in the opened position of the shutter the openings in the cassette are exposed appropriately the urging means 30 urge the shutter against a bounding wall 278 of the recessed portion 236 of the main wall 203. This also precludes rattling of the shutter 212 in its open position. The required pressure is provided by a spring 268. In the open position of the shutter the urging means have moved towards the pivotal axis 269. This is possible because the urging means 30 are formed with a slot 266 at the location of the pivotal axis 269. This displacement causes the spring 268 to be tensioned and to exert a force on the shutter 212 via the urging means 30. The spring 268 also ensures that when the cassette is removed the urging means 30 resume the position illustrated in Fig. 15.

As already stated in the beginning, the apparatus in accordance with the invention can also cooperate with a Compact Cassette. Since a Compact Cassette does not comprise a shutter the actuating means 30 (which includes the urging means) need not be activated to open the shutter. In the apparatus in accordance with the invention this is achieved by pushing away the urging means 30, so that the urging projections 264 and 265 are not in contact with the Compact Cassette. For this purpose the urging means 30 comprise sensing means 32 and 33. Fig. 18 is a front view of the Compact Cassette 18 and the urging means 30. The fork-shaped free end portion 276 of the urging means 30 now cannot engage around the cassette. The sensing means 32 and 33, situated at the location of the fork-shaped free end portion 276, are now in contact with a front side 280 of the cassette 18 at the location of the thicker portion 282. Thus, the urging means 30 are pushed away when the cassette 18 is inserted.

It is to be noted that the invention is not limited to the embodiments of the cassette shown herein but that numerous other embodiments are possible within the scope of the appended Claims. For example, a variety of other constructions of the urging means are possible, for example comprising rubber means. The urging means may be dispensed with and the shutter can be retained by means of projections on the main walls of the cassettes or by friction between the shutter and the main wall, so that some effort must be applied to move the shutter. The shutter may also be used in conjunction with non-flat cassettes, for example the standard Compact Cassettes which have a thicker portion at the location of the openings in the front wall.

Moreover, the tape transport need not be effected by means of capstans and pressure rollers, the tape transport speed being controlled by controlling the reel drive spindles. In that case the tape transport speed can be derived from the signals originating from the magnetic head means. In that case the cassette front wall need be provided with only one central opening and the shutter front wall need comprise only one central front wall. An intermediate form may be to provide only one capstan-pressure roller combination for tape transport in both directions, which combination operates normally in the case of tape transport in one direction to provide tape traction and which in the other direction of tape transport, in which the tape is driven by a reel drive spindle, controls the tape speed by holding back the tape. In this case the cassette front wall needs to have only one pressure-roller opening in addition to the central opening, and only one front opening needs to be provided in the shutter front wall.

## Claims

1. A system for recording/reproducing signals on magnetic tape (56; 168; 258) comprising at least one cassette (2; 41; 140; 201) and at least one apparatus (1) cooperating therewith, which apparatus (1) comprises magnetic head means (4) cooperating with the magnetic tape (56; 168; 258) and which cassette (2; 41; 140; 201) is provided with the magnetic tape (56; 168; 258) on two coplanar reels in a housing (42; 202) having two plane parallel main walls (44; 203, 240) interconnected by transverse walls (46; 205, 48), at least one of the main walls (44; 203, 240) being provided with two drive apertures (58, 60; 246, 248) for the passage of apparatus reel drive spindles (5, 6) and one transverse wall constituting a cassette front wall (46; 205) having a cassette front wall central opening (50; 206) and cassette front wall side openings (52, 54; 207, 208) on both sides of the cassette front wall central opening (50; 206), which cassette (2; 41; 140; 201) comprises a shutter (28; 66; 142; 212) which is situated on the outside of the cassette (2; 41; 140; 201) and which is slidable over a certain slide travel distance between a closed position and an open position to cover a cassette front wall opening (50; 206, 52, 54; 207, 208) in the closed position and to expose said opening (50; 206, 52, 54; 207, 208) in the open position, which shutter (28; 66; 142, 212) is slidable along the cassette front wall (46; 205) in a lateral direction and has a shutter front wall (216) situated near the cassette front wall (46; 205) and extending parallel thereto, the shutter front wall (216) being formed with a shutter front wall opening (86, 88; 218, 219) such that in the closed position said shutter front wall opening (86, 88; 218, 219) is situated adjacent a cassette front wall opening (50; 206, 52, 54; 207, 208) and faces an imperforate portion of the cassette front wall (46; 205) and the central cassette front wall opening (50; 206) is covered at least in part by an imperforate portion of the shutter front wall (216), the cassette (2; 41; 140; 201) comprising resilient means (98; 152, 154; 257) which urge the shutter to the closed position, characterized in that
- the cassette (2; 41; 140; 201) comprises only a single shutter (28; 66; 142, 212),
- the shutter (28, 66; 142, 212) has two shutter front wall openings (86, 88; 218, 219) and three shutter front wall cover parts (84, 90, 92; 232; 217, 220, 221), and
- the dimensions in the lateral direction of the slide travel, the cassette front wall openings (10) and the shutter front wall openings (86, 88; 218, 219) are all substantially equal.

2. A system as claimed in Claim 1, characterized in that,
- a main portion of the shutter (70, 74; 213, 214) comprises cover portions (108, 110; 222, 223) which cover the two drive apertures (58, 60; 246, 248) in the closed position and
- the main portion of the shutter (70, 74; 213, 214) is formed with a single corresponding aperture (76; 224) which in the open position of the shutter (28; 66; 142, 212) faces one of the drive apertures (58, 60; 248), in which open position the other drive aperture (58, 60; 246) is situated beside the shutter (28; 66; 142, 212), so that both drive apertures (58, 60; 248) are exposed.

3. A system as claimed in Claim 2, characterized in that
- one main wall of the cassette (203) is substantially imperforate and
- the main portion of the shutter (142, 214) overlying the substantially imperforate main wall (203) extends at the most over half the distance between the cassette front wall (205) and the centres of the reels.

4. A system as claimed in any one of the preceding Claims, characterized in that,
- a main wall (44; 240) of the cassette has locating apertures (62, 64; 170, 172; 250, 252) for the passage of locating pins (11, 12) of an apparatus, which pins are engageable in the locating apertures and each have a supporting surface (13, 14, 254, 256) adapted to cooperate with the main surface directly around the locating aperture,
- a main portion (68, 70; 213) of the shutter has passages (78, 80, 82; 225, 226) whose area is larger than that of the supporting surfaces (13, 14; 254, 256) of the locating pins (11, 12),
- in the open position the passages (78, 80, 82; 225, 226) overlie the locating apertures (62, 64; 170, 172; 250, 252) and expose parts of the main wall (44; 240) of the cassette around said apertures to allow an unobstructed cooperation between the main wall (44; 240) and the locating pins (11, 12) and
- in the closed position of the shutter (28; 66; 142, 212) the passages (78, 80, 82; 225, 226) overlie imperforate parts of a main wall (44; 240).

5. A system as claimed in Claim 4, characterized in that,
- the other main wall (203) of the cassette is formed with further locating apertures (209, 210) and
- the other main portion (214) of the shutter is formed with further passages.

6. A system as claimed in Claim 2 or 3, characterized in that passages (78, 80, 82; 225, 226) for locating pins (13, 14) are provided only in the main portions (214) of the shutter which are situated at the location of the main wall (240) in which the drive apertures (246, 248) are formed.

7. A system as claimed in any one of the preceding Claims, characterized in that the shutter (66) is movable along the cassette front wall (46) from its closed position in two opposite directions and has two open positions situated symmetrically at opposite sides of the closed position.

8. A system as claimed in any one of the preceding Claims, characterized in that the main walls (44) and the cassette front wall (46) are locally recessed over a distance (a) at least substantially equal to the thickness (d) of the shutter (66), in such a way that the non-recessed portions of said walls and the outer surface of the shutter are substantially flush with each other.

9. A system as claimed in Claim 1, characterized in that,
- the resilient means are spring means (98; 152, 154; 257) which are situated between a main wall (44; 144; 240) of the cassette and a main portion (68; 160; 212) of the shutter and
- the spring means (98; 152, 154; 257) remain covered by the shutter in any position of the shutter.

10. A system as claimed in Claim 9, characterized in that,
- the spring means comprise a spring (257) having two legs (257a, 257b),
- the spring (257) is located in a recessed portion (242) in a cassette main wall (240),
- the shutter main portion (213) comprises an engaging portion (228) extending perpendicular to the main portion (213) and
- one of the legs (257a) of the spring engages the engaging portion (228) on the shutter and the other leg (257b) engages the cassette main wall (240).

11. A system as claimed in Claim 1, characterized in that,
- the apparatus (1) comprises urging means (30) for exerting lateral pressure on a lateral edge (272, 274) of a main portion (213, 214) of the shutter of the cassette to open the shutter and
- at a lateral edge (272, 274) of the shutter the cassette has a recess (260, 261) in a main wall (203, 240) for receiving that portion (264, 265) of the urging means (30) which is in contact with the lateral edge (272, 274) of the shutter.

12. A system as claimed in Claim 11, characterized in that the urging means (30) are configured for the simultaneous cooperation with lateral edges (272, 274) of the main portions of the shutter (213, 214) at both main walls (203, 240) of the cassette.

13. A system as claimed in Claim 11 or 12, characterized in that the urging means (30) comprise an at least substantially fork-shaped free end portion (276) which engages around the cassette front wall (280) and comprises urging projections (264, 265) for cooperation with the shutter (212).

14. A system as claimed in Claim 11, 12 or 13, characterized in that the urging means (30) are pivotable about a pivotal axis (269) and are also translatable in a direction towards the pivotal axis (269).

15. A system as claimed in Claim 11, characterized in that at its side which is remote from the shutter the recess has a bevelled portion (270, 271) which is inclined relative to the cassette front wall.

16. An apparatus (1) for use in a system as claimed in any one of claims 1, 11, 12, 13 and 14.

17. A cassette (2; 41; 140; 201) for use in a system as claimed in any one of claim 1 to 11 and 15.

## Patentansprüche

1. System zum Aufnehmen/Wiedergeben von Signalen auf Magnetband (56; 168; 258) mit wenigstens einer Kassette (2; 41; 140; 201) sowie wenigstens einem damit zusammenarbeitenden Gerät (1), wobei dieses Gerät (1) mit mit dem Magnetband (56; 168; 258) zusammenarbeitenden Magnetkopfmitteln (4) versehen ist und wobei diese Kassette (2; 41; 140; 201) mit dem Magnetband (56; 168; 258) versehen ist, und zwar auf zwei koplanaren Spulen in einem Gehäuse (42; 202) mit zwei planparallelen Hauptwänden (44; 203, 240), die durch Querwände (46; 205, 48) miteinander verbunden sind, wobei wenigstens eine der Hauptwände (44; 203, 240) mit zwei Antriebsöffnungen (58. 60; 246, 248) für den Durchgang von Wickelantriebsspindeln (5, 6) versehen ist und eine Querwand eine Kassettenvorderwand (46; 205) bildet mit einer Kassettenvorderwandzentralöffnung (50; 206) und mit auf beiden Seiten der Kassettenvorderwandzentralöffnung (50; 206) liegenden Kassettenvorderwandseitenöffnungen (52, 54; 207, 208), wobei diese Kassette (2; 41; 140; 201) mit einem außerhalb der Kassette (2; 41; 140; 201) liegenden und über einen bestimmten Schiebeabstand zwischen einer geschlossenen und einer offenen Lage beweglichen Verschluß (28; 66; 142; 212) versehen sind, der in der geschlossenen Lage eine Kasettenvorderwandöffnung (50; 206, 52, 54; 207, 208) bedeckt und in der offenen Lage diese Öffnung (50; 206, 52, 54; 207, 208) freigibt, wobei dieser Verschluß (28; 66; 142, 212) über die Kassettenvorderwand (46; 205) in seitlicher Richtung verschiebbar ist und eine in der Nähe der Kassettenvorderwand (46; 205) vorgesehene Verschlußvorderwand (216) aufweist und sich parallel dazu erstreckt, wobei die Verschlußvorderwand (216) derart mit einer Verschlußvorderwandöffnung (86, 88; 218, 219) versehen ist, daß in der geschlossenen Lage die genannte Verschlußvorderwandöffnung (86, 88; 218, 219) neben einer Kassettenvorderwandöffnung (50; 206, 52, 54; 207, 208) liegt und einem geschlossen Teil der Kassettenvorderwand (46; 205) zugewandt ist und die Kassettenvorderwand-zentralöffnung (50; 206) wenigstens teilweise durch einen geschlossenen Teil der Verschlußvorderwand (216) bedeckt ist, wobei die Kassette (2; 41; 140; 201) Federmittel (98; 152, 154; 257) aufweist, die den Verschluß in die geschlossene Lage drücken, dadurch gekennzeichnet, daß
- die Kassette (2; 41; 140; 201) nur einen einzigen Verschluß (28; 66; 142, 212) aufweist,
- der Verschluß (28; 66; 142, 212) zwei Verschlußvorduwandöffhungen (86, 88; 218,219) aufweist und drei Verschlußvorderwandbedeckungsteile (84, 90, 92; 232; 217, 220, 221), und
- die Abmessungen der Kassettenvorderwandöffnungen (10) und der Verschlußvorderwandöffnungen (86, 88; 218, 219) in der lateralen Richtung des Schiebevorgangs, alle nahezu gleich sind.

2. System nach Anspruch 1, dadurch gekennzeichnet, daß
- ein Hauptteil des Verschlusses (70, 74; 213, 214) Abdeckteile (108, 110; 222, 223) aufweist, die in der geschlossenen Lage die beiden Antriebsöffnungen (58, 60; 246, 248) bedecken und
- der Hauptteil des Verschlusses (70, 74; 213, 214) mit einer einzigen entsprechenden Ausnehmung (76; 224) versehen ist, die sich in geöffneter Lage des Verschlusses (28; 66; 142, 212) vor einer der Antriebsöffhung (58, 60; 248) befindet und wobei in dieser geöffneten Lage die andere Antriebsöffnung sich neben dem Verschluß (28; 66; 142, 212) befindet, so daß die beiden Antriebsöffungen (58, 60; 248) unbedeckt sind.

3. System nach Anspruch 2, dadurch gekennzeichnet, daß
- eine Hauptwand der Kassette (203) im wesentlichen geschlossen ist und
- der Hauptteil des Verschlusses (142, 214) über der im wesentlichen geschlossenen Hauptwand (203) sich über höchstens die Hälfte des Abstandes von der Kassettenvorderwand (205) zur Mitte der Spulen hin erstreckt.

4. System nach einem der vorstehenden Ansprüche, dadurch gekennzeichnet, daß
- eine Hauptwand (44; 2140) der Kassette Positionierungsäffnungen (62, 64; 170, 172; 250, 252) aufweist zum Hindurchlassen von Positionierungsstiften (11, 12) eines Gerätes, die durch die Positionierungsöffnungen hindurchragen und eine Auflegefläche (13, 14, 254, 156) haben, die mit einer Hauptfläche unmittelbar um die Positionierungsöffnungen herum zusammenarbeitet,
- ein Hauptteil (68, 70; 213) des Verschlusses Durchlassöffnungen (78, 80, 82; 225, 226) aufweist mit einer Oberfläche, die größer ist als die der Auflegeflächen (13, 14; 254, 256) der Positionierungsstifte (11, 12),
- in der offenen Lage die Durchlassöffnungen (78, 80, 82; 225, 226) über den Positionierungsöffnungen (62, 64; 170, 172; 250, 252) liegen und um dieselben herum liegende Teile der Hauptwand (44; 240) der Kassette unbedeckt lassen, damit die Hauptwand (44; 240) und die Positionierungsstifte (11, 12) unbehindert zusammenarbeiten können und
- in der geschlossenen Lage des Verschlusses ( 28; 66; 142, 212) die Durchlassöffnungen (78, 80, 82; 225, 226) über geschlossenen Teilen einer Hauptwand (44; 240) liegen.

5. System nach Anspruch 4, dadurch gekennzeichnet, daß
- die andere Hauptwand (203) der Kassette mit weiteren Durcmassöffnungen (209, 210) versehen ist und
- der andere Hauptteil (214) des Verschlusses mit weiteren Durchgängen versehen ist.

6. System nach Anspruch 2 oder 3, dadurch gekennzeichnet, daß Durchlassöffnungen (78, 80, 82; 225, 226) für Positionierungsstifte (11, 12) nur ein den Hauptteilen (214) des Verschlusses vorgesehen sind, die an der Stelle der Hauptwand (240) liegen, in der die Antriebsöffnungen (246, 248) vorgesehen sind.

7. System nach einem der vorstehenden Ansprüche, dadurch gekennzeichnet, daß der Verschluß (66) längs der Kassettenvorderwand (46) aus der geschlossenen Lage in zwei einander entgegengesetzten Richtungen verschiebbar ist und zwei offene Lagen kennt, die sich symmetrisch auf beiden Seiten der geschlossenen Lage befinden.

8. System nach einem der vorstehenden Ansprüche, dadurch gekennzeichnet, daß die Hauptwände (44) und die Kassettenvorderwand (46) über einen Abstand (a) nahezu entsprechend der Dicke (d) des Verschlusses (66) örtlich vertieft sind, so daß die nicht vertieften Teile der genannten Wände und die Außenseite des Verschlusses im wesentlichen auf gleichem Pegel liegen.

9. System nach Anspruch 1, dadurch gekennzeichnet, daß
- die Federmittel (98; 152, 154; 257) Mittel sind, die zwischen einer Hauptwand (44; 144; 240) der Kassette und einem Hauptteil (68, 70; 213) des Verschlusses liegen und
- die Federmittel (98; 152, 154; 257) in jeder Lage des Verschlusses nach wie vor durch diesen Verschluß bedeckt sind.

10. System nach Anspruch 9, dadurch gekennzeichnet, daß
- die Federmittel eine Feder (257) mit zwei Schenkeln (257a, 257b) aufweisen,
- die Feder (257) in einem vertieften Teil (242) in einer Kassettenhauptwand (240) liegt,
- der Verschlußhauptteil (213) einen zusammenarbeitenden Teil (228) aufweist, der sich senkrecht zu dem Hauptteil (213) erstreckt und
- einer der Schenkel (257a) der Feder mit dem zusammenarbeitenden Teil (228) auf dem Verschluß zusammenarbeitet und der andere Schenkel (257b) mit der Kassettenhauptwand (240) zusammenarbeitet.

11. System nach Anspruch 1, dadurch gekennzeichnet, daß
- das Gerät (1) mit Schiebemitteln (30) versehen ist um in seitlicher Richtung gegen eine Seite (272, 274) eines Hauptteils (213, 214) des Verschlusses der Kassette zu drücken um auf diese Weise den Verschluß zu öffnen und
- die Kassetten auf einer Seite (272, 274) des Verschlusses in einer Hauptwand (203, 240) mit einer Ausnehmung (260, 261) versehen sind zum Aufnehmen des die Seite (272, 274) des Verschlusses berührenden Teils (264, 265) der Schiebemittel (30).

12. System nach Anspruch 11, dadurch gekennzeichnet, daß die Schiebemittel (30) zur gleichzeitigen Zusammenarbeit der Seiten (272, 274) der Hauptteile des Verschlusses (213, 214) auf den beiden Hauptwänden (203, 240) der Kassette vorgesehen sind.

13. System nach Anspruch 11 oder 12, dadurch gekennzeichnet, daß die Schiebemittel (30) ein wenigstens nahezu gabelförmiges freies Ende (276) aufweisen, das die Kassettenvorderwand (280) umgreift und mit Schiebenocken (264, 265) versehen ist zum Zusammenarbeiten mit dem Verschluß (212).

14. System nach Anspruch 11, 12 oder 13, dadurch gekennzeichnet, daß die Schiebemittel (30) um eine Schwenkachse (269) schwenkbar und zugleich in einer Richtung zu der Schwenkachse (269) hin geradlinig verschiebbar sind.

15. System nach Anspruch 11, dadurch gekennzeichnet, daß die Ausnehmung auf der vom Verschluß abgewandten Seite eine sich schräg zu der Kassettenvorderwand erstreckende schräge Seite (270, 271) aufweist.

16. Gerät (1) zum Gebrauch bei einem System nach einem der Ansprüche 1, 11, 12, 13 und 14.

17. Kassette (2; 41; 140; 201) zum Gebrauch bei einem System nach einem der Ansprüche 1 bis 11 und 15.

## Revendications

1. Système d'enregistrement/reproduction de signaux sur bande magnétique (56; 168; 258) comprenant au moins une cassette (2; 41; 140; 201) et au moins un appareil (1) coopérant avec cette dernière, lequel appareil (1) comprend un moyen à tête magnétique (4) coopérant avec la bande magnétique (56; 168; 258) et laquelle cassette (2; 41; 140; 201) contient la bande magnétique (56; 168; 258) sur deux bobines coplanaires dans un boîtier (42; 202) comportant deux parois principales parallèles planes (44; 203, 240) reliées par des parois transversales (46; 205, 48), étant entendu qu'au moins une des parois principales (44; 203, 240) comporte deux orifices d'entraînement (58, 60; 246, 248) pour permettre le passage de mandrins d'entraînement de bobines (5, 6) de l'appareil et qu'une paroi transversale constitue une paroi avant (46; 205) de la cassette comportant une ouverture centrale (50; 206) de la paroi avant de la cassette et des ouvertures latérales (52, 54; 207, 208) de la paroi avant de la cassette de chaque côté de l'ouverture centrale (50; 206) de la paroi avant de la cassette, laquelle cassette (2; 41; 140; 201) comprend un volet de protection (28; 66; 142; 212) qui se trouve à l'extérieur de la cassette (2; 41; 140; 201) et qui peut coulisser sur une certaine distance de coulissement entre une position fermée et une position ouverte afin de couvrir une ouverture (50; 206, 52, 54; 207, 208) de la paroi avant de la cassette dans la position fermée, et d'exposer ladite ouverture (50; 206, 52, 54; 207, 208) dans la position ouverte, lequel volet de protection (28; 66; 142, 212) peut coulisser le long de la paroi avant (46; 205) de la cassette dans une direction latérale et comporte une paroi avant de volet de protection (216) située près de la paroi avant (46; 205) de la cassette et s'étendant parallèlement à celle-ci, la paroi avant (216) du volet de protection comportant une ouverture (86, 88; 218, 219) de paroi avant de volet de protection telle que, dans la position fermée, ladite ouverture (86, 88; 218, 219) de la paroi avant du volet de protection soit située près d'une ouverture (50; 206, 52, 54; 207, 208) de la paroi avant de la cassette face à une partie imperforée (46; 205) de la paroi avant de la cassette et l'ouverture centrale (50; 206) de la paroi avant de la cassette soit couverte du moins en partie par une partie imperforée de la paroi avant (216) du volet de protection, la cassette (2; 41; 140; 201) comprenant des moyens élastiques (98; 152, 154; 257) qui rappellent le volet de protection vers la position fermée, caractérisé en ce que
- la cassette (2; 41; 140; 201) ne comprend qu'un seul volet de protection (28; 66; 142, 212),
- le volet de protection (28, 66; 142, 212) comporte deux ouvertures de paroi avant de volet (86, 88; 218, 219) et trois parties de couverture de paroi de volet (84, 90, 92; 232; 217, 220, 221), et
- les dimensions, dans la direction latérale de la course de coulissement, des ouvertures (10) de la paroi avant de la cassette et des ouvertures (86, 88; 218, 219) de la paroi avant du volet de protection sont toutes sensiblement égales.

2. Système suivant la revendication 1, caractérisé en ce,
- qu'une partie principale du volet de protection (73, 74; 213, 214) comprend des parties de couverture (108, 110; 222, 223) qui couvrent les deux orifices d'entraînement (58, 60; 246, 248) dans la position fermée, et
- que la partie principale du volet de protection (70, 74; 213, 214) est pourvue d'un seul orifice correspondant (76; 224) qui, dans la position ouverte du volet de protection (28; 66; 142, 212), fait face à un des orifices d'entraînement (58, 60; 248), et dans cette position ouverte, l'autre orifice d'entraînement (58, 60; 246) est situé à côté du volet de protection (28; 66; 142, 212), de telle sorte que les deux orifices d'entraînement (58, 60; 248) soient exposés.

3. Système suivant la revendication 2, caractérisé en ce
- qu'une paroi principale de la cassette (203) est sensiblement imperforée, et
- que la partie principale du volet de protection (142, 214) recouvrant la paroi principale sensiblement imperforée (203) s'étend tout au plus sur la moitié de la distance séparant la paroi avant (205) de la cassette des centres des bobines.

4. Système suivant l'une quelconque des revendications précédentes, caractérisé en ce,
- qu'une paroi principale (44; 240) de la cassette comporte des orifices de positionnement (62, 64; 170, 172; 250, 252) pour permettre le passage d'ergots de positionnement (11, 12) d'un appareil, lesquels ergots peuvent être engagés dans les orifices de positionnement et ont chacun une surface de support (13, 14, 254, 256) à même de coopérer avec la surface principale juste autour de l'orifice de positionnement,
- qu'une partie principale (68, 70; 213) du volet de protection comporte des passages (78, 80, 82; 225, 226) qui sont plus grands que les surfaces de support (13, 14; 254, 256) des ergots de positionnement (11, 12),
- que dans la position ouverte, les passages (78, 80, 82; 225, 226) surplombent les orifices de positionnement (62, 64; 170, 172; 250, 252) et exposent des parties de la paroi principale (44; 240) de la cassette autour desdits orifices afin de permettre une coopération sans entrave entre la paroi principale (44; 240) et les ergots de positionnement (11, 12) et
- que dans la position fermée du volet de protection (28; 66; 142, 212), les passages (78, 80, 82; 225, 226) recouvrent des parties imperforées d'une paroi principale (44; 240).

5. Système suivant la revendication 4, caractérisé en ce que,
- l'autre paroi principale (203) de la cassette est pourvue d'autres orifices de positionnement (209, 210), et
- l'autre partie principale (214) du volet de protection est pourvue d'autres passages.

6. Système suivant la revendication 2 ou 3, caractérisé en ce que des passages (78, 80, 82; 225, 226) pour des ergots de positionnement (13, 14) ne sont prévus que dans les parties principales (214) du volet de protection, qui sont situées au niveau de la paroi principale (240) dans laquelle les orifices d'entraînement (246, 248) sont prévus.

7. Système suivant l'une quelconque des revendications précédentes, caractérisé en ce que le volet de protection (66) est mobile le long de la paroi avant (46) de la cassette depuis sa position fermée dans deux sens opposés et a deux positions ouvertes situées symétriquement de chaque côté de la position fermée.

8. Système suivant l'une quelconque des revendications précédentes, caractérisé en ce que les parois principales (44) et la paroi avant (46) de la cassette sont évidées localement sur une distance (a) au moins sensiblement égale à l'épaisseur (d) du volet de protection (66), de telle sorte que les parties non évidées desdites parois et la surface extérieure du volet de protection soient sensiblement dans le même plan.

9. Système suivant la revendication 1, caractérisé en ce que,
- les moyens élastiques sont des moyens à ressort (98; 152, 154; 257) qui sont situés entre une paroi principale (44; 144; 240) de la cassette et une partie principale (68; 160; 212) du volet de protection, et
- les moyens à ressort (98; 152, 154; 257) restent couverts par le volet de protection quelle que soit la position du volet de protection.

10. Système suivant la revendication 9, caractérisé en ce que
- les moyens à ressort comprennent un ressort (257) à deux branches (257a, 257b),
- le ressort (257) est placé dans une partie évidée (242) d'une paroi principale (240) de la cassette,
- la partie principale (213) du volet de protection comprend une partie d'engagement (228) s'étendant perpendiculairement à la partie principale (213), et
- une des branches (257a) du ressort attaque la partie d'engagement (228) sur le volet de protection et l'autre branche (257b) attaque la paroi principale (240) de la cassette.

11. Système suivant la revendication 1, caractérisé en ce,
- que l'appareil (1) comprend un moyen de sollicitation (30) destiné à exercer une pression latérale sur un bord latéral (272, 274) d'une partie principale (213, 214) du volet de protection de la cassette afin d'ouvrir le volet de protection, et
- qu'au niveau d'un bord latéral (272, 274) du volet de protection, la cassette présente un évidement (260, 261) dans une paroi principale (203, 240) pour recevoir la partie (264, 265) du moyen de sollicitation (30) qui est en contact avec le bord latéral (272, 274) du volet de protection.

12. Système suivant la revendication 11, caractérisé en ce que le moyen de sollicitation (30) est configuré pour la coopération simultanée avec des bords latéraux (272, 274) des parties principales du volet de protection (213, 214) au niveau des deux parois principales (203, 240) de la cassette.

13. Système suivant la revendication 11 ou 12, caractérisé en ce que le moyen de sollicitation (30) comprend une partie d'extrémité libre (276) au moins sensiblement en forme de fourche qui enserre la paroi avant (280) de la cassette et comprend des saillies de sollicitation (264, 265) pour la coopération avec le volet de protection (212).

14. Système suivant la revendication 11, 12 ou 13, caractérisé en ce que le moyen de sollicitation (30) peut pivoter autour d'un axe de pivotement (269) et peut également se déplacer dans un sens dirigé vers l'axe de pivotement (269).

15. Système suivant la revendication 11, caractérisé en ce que de son côté qui est éloigné du volet de protection, l'évidement comprend une partie chanfreinée (270, 271) qui est inclinée par rapport à la paroi avant de la cassette.

16. Appareil (1) à utiliser dans un système suivant l'une quelconque des revendications 1, 11, 12, 13 et 14.

17. Cassette (2; 41; 140; 201) à utiliser dans un système suivant l'une quelconque des revendications 1 à 11 et15.
